# EUROPÄISCHE PATENTSCHRIFT

(11) **EP 2 604 544 B1**
(45) Veröffentlichungstag und Bekanntmachung des Hinweises auf die Patenterteilung: **23.04.2014**
(21) Anmeldenummer: 12196340.9
(22) Anmeldetag: 10.12.2012
(51) Int. Cl.: B65D 47/08, B65D 51/24, A47J 31/50, A47J 31/44, F25D 3/02

(54) **Vorratsbehälter zum Aufbewahren eines flüssigen Nahrungsmittels, etwa von Milch**
Storage container for storing a food liquid, such as milk
Réservoir de stockage pour le rangement d'un produit alimentaire liquide, par exemple de lait

(30) Priorität: 16.12.2011 DE 202011052328 U
(43) Veröffentlichungstag der Anmeldung: 19.06.2013
(73) Patentinhaber: WIK Far East Ltd, North Point Hong Kong (CN)
(72) Erfinder: Speh, Christoph, 45475 Mülheim an der Ruhr (DE)
(74) Vertreter: Haverkamp, Jens

(56) Entgegenhaltungen:
- DE-U1-202008 016 202
- US-A1- 2011 253 733

## Beschreibung

Die Erfindung betrifft einen Vorratsbehälter zum Aufbewahren eines flüssigen Nahrungsmittels, etwa von Milch im Zusammenhang mit der Zufuhr derselben an eine Zubereitungsmaschine, etwa eine Kaffeemaschine, wobei der Behälter geschlossen mit einer oberseitigen Ausgabeöffnung zur Entnahme von für eine Zubereitung benötigter Flüssigkeit aus dem Behälter ausgeführt ist und dass der Behälter über einen schwenkbar an diesem angeschlossenen Henkel zum Tragen des Behälters verfügt, welcher Henkel einem zum Verschließen der Ausgabeöffnung vorgesehenen Verschlusskörper trägt.

Kaffeemaschinen, insbesondere wenn diese als sogenannte Vollautomaten ausgeführt sind, verfügen als Getränkezubereitungsmaschinen mitunter über einen Milchbehälter. Ein solcher Milchbehälter, welcher typischerweise ein Zubehörteil für eine solche Kaffeemaschine darstellt, dient zum Bevorraten von Milch, aus dem für die Bereitung von Kaffee-Milch-Mischgetränken, wie beispielsweise Cappuccino oder dergleichen, Milch entnommen wird. Typischerweise handelt es sich bei einem solchen Milchbehälter um einen neben der eigentlichen Kaffeemaschine anzuordnenden Behälter, aus dem eine Milchentnahmeleitung herausgeführt und an eine Saugpumpe der Kaffeemaschine angeschlossen ist. Derartige Milchbehälter verfügen über ein thermisch isoliertes Gehäuse sowie weisen gemäß einer Ausgestaltung eine aktive Kühlung, beispielsweise ausgeführt als Kühlung mittels eines Peltier-Elementes oder im Wege einer ansonsten hinlänglich bekannten Kompressionskühlung auf. In einem solchen Milchbehälter verbleibt die Milch in ihrem Gebinde. Die Milchentnahmeleitung wird in das Gebinde hinein gelegt und durch eine Leitungsdurchbrechung aus dem Gehäuse herausgeführt. Zum Betrieb eines solchen, als Kühlschrank konzipierten Milchbehälters ist eine elektrische Stromversorgung erforderlich. Vorteilhaft bei einem solchen Milchbehälter ist, dass in diesem ein darin eingestelltes Milchgebinde zum Erreichen der gewünschten Kühltemperatur herabgekühlt werden kann.

In zunehmendem Maße werden Kaffeevollautomaten auch im häuslichen

Bereich eingesetzt. Die Anschaffung eines zusätzlichen aktiven Milchkühlschrankes, wie vorbeschrieben, wird oftmals als unnötige Anschaffung angesehen, mitunter auch aus Platz- und Stromverbrauchsgründen. Andererseits wird von Verbrauchern jedoch eine Bereitung von Kaffee-Milch-Mischgetränken gewünscht. In einem solchen Fall bedient man sich entweder eines Milchbehälters, in den die Milch eingefüllt wird oder stellt das Milchgebinde neben die Kaffeemaschine. Bei einer solchen Anwendung wird benutzerseitig jedoch öfters die Erfahrung gemacht, dass die neben der Kaffeemaschine positionierte Milch unerkannt sauer geworden ist und dementsprechend das mit dieser bereitete Kaffee-Milch-Mischgetränk nicht dem gewünschten entspricht. Abhilfe bringt in Bezug auf diese Problematik der aus DE-U-202008016202 bekannt gewordene passive Milchaufbewahrungsbehälter. Bei diesem ist eine passive Kühlung mittels zumindest eines, zuvor in einem Eis- oder Gefrierfach gekühlten Kühlelementes vorgesehen. Die Milch selbst befindet sich bei diesem vorbekannten Milchaufbewahrungsbehälter in ihrem Verkaufsgebinde, welches als solches in den thermisch isolierten Milchaufbewahrungsbehälter eingestellt wird.

Eingesetzt kann ein solcher Milchbehälter, wie aus DE-U-202008016202 bekannt, dann allerdings nicht, wenn ein Verkaufsgebinde nicht in den Kühlraum des thermisch isolierten Milchaufbewahrungsbehälters eingesetzt werden kann. Dieses ist beispielsweise bei solchen Gebinden der Fall, die auf Grund ihrer Geometrie nicht in den Kühlraum einpassen oder deren Gebinde schlichtweg zu groß sind.

Ein Vorratsbehälter zum Aufbewahren eines flüssigen Nahrungsmittels gemäß dem Oberbegriff des Anspruchs 1 ist aus US-A-2011/0253733 bekannt. Der in diesem Dokument beschriebene Deckel für ein solches Vorratsbehältnis verfügt über einen schwenkbar daran angelenkten und nach Art eines Bügels ausgebildeten Griff zum Tragen des Behälters. Der Griff umfasst ein Verschlusselement, welches die Auslauföffnung des Behälters verschließt, wenn der Griff in seiner von dem Deckel abragenden Stellung ist. Offen ist die Ausgabeöffnung in der abgeklappten Nichtgebrauchsstellung des Henkels.

Ausgehend von diesem diskutierten Stand der Technik liegt der Erfindung daher die Aufgabe zu Grunde, einen Behälter vorzuschlagen, der sich insbesondere als Einsatz in einem thermisch isolierten, passiv gekühlten Milchaufbewahrungsbehälter eignet.

Gelöst wird diese Aufgabe erfindungsgemäß durch einen eingangs genannten, gattungsgemäßen Vorratsbehälter, bei dem der Henkel bezüglich seiner Verschwenkbarkeit an dem Behälter und der Verschlusskörper an dem Henkel derart angeordnet sind, dass in einer abgeklappten, bezüglich seiner Tragefunktion Nichtgebrauchsstellung des Henkels durch den Verschlusskörper die Ausgabeöffnung verschlossen ist.

Dieser Vorratsbehälter ist prinzipiell als geschlossener Behälter ausgeführt, wobei die geschlossene Ausgestaltung des Behälters entweder inhärent oder durch Vorsehen eines den Behälter oberseitig verschließenden, jedoch öffnenbaren oder abnehmbaren Deckels vorgesehen sein kann. Oberseitig trägt der Behälter eine Ausgabeöffnung, die dem Zweck einer Entnahme bzw. einem Abziehen von für die Zubereitung benötigter Flüssigkeit aus dem Behälter dient. Dient der Behälter beispielsweise zum Bevorraten von Milch, die im Zusammenhang mit einer Kaffeegetränkezubereitungsmaschine verwendet wird, befindet sich in dem Behälter Milch. In die Ausgabeöffnung wird ein Saugschlauch einer Milchförderleitung eingesetzt. Zum Zwecke einer einfachen und vor allem sicheren Handhabung des Behälters verfügt dieser über einen schwenkbar daran angeschlossenen Henkel. Der Henkel dient zwar zum sicheren Tragen des Behälters, beispielsweise um diesen aus dem Kühlschrank zu einem thermisch isolierten Milchaufbewahrungsbehälter, angeordnet neben einer Kaffeemaschine, zu transportieren oder umgekehrt. Dem Henkel des Behälters kommt jedoch neben dieser Funktion die Funktion des Trägers eines Verschlusskörpers zum Verschließen der Ausgabeöffnung zu, und zwar dann, wenn der Behälter nicht benutzt wird. Bei einer Bevorratung von Milch in dem Behälter ist die Ausgabeöffnung typischerweise mit dem Verschlusskörper verschlossen, etwa wenn sich der Behälter mit seinem Inhalt im Kühlschrank befindet. Befindet sich der Behälter dagegen in einem thermisch isolierten Milchaufbewahrungsbehälter befindet sich der Verschlusskörper außerhalb der Ausgabeöffnung, damit in diese eine Saugleitung eingeschoben werden kann. Für die Zwecke des Öffnens und Verschließens der Ausgabeöffnung macht man sich die Verschwenkbarkeit des Henkels zu nutze. Der Henkel ist daher derart an dem Behälter angelenkt und in eine solche Richtung verschwenkbar, dass dieser mit seinem Verschlusskörper in Richtung zu der Ausgabeöffnung hin- und von dieser weg verschwenkt werden kann. Der Verschlusskörper selbst befindet sich an einer solchen Position an dem Henkel, damit bei entsprechendem Verschwenken desselben in Richtung zur Ausgabeöffnung hin der Verschlusskörper an die Ausgabeöffnung herangeführt wird und in der abgesenkten Stellung des Henkels diese verschließt. Der Verschlusskörper ist also unverlierbar dem Behälter zugeordnet.

Ausgenutzt wird bei diesem Konzept, dass in der Gebrauchsstellung des Vorratsbehälters, wenn in diesem ein flüssiges Nahrungsmittel, beispielsweise Milch, für die Zubereitung bevorratet ist und der Vorratsbehälter beispielsweise in einen thermisch isolierten Milchaufbewahrungsbehälter eingesetzt ist, die Verschlussöffnung offen sein muss. Dann befindet sich der Henkel mit seinem Verschlussstopfen in seiner anderen, die Ausgabeöffnung nicht verschließenden Stellung. Die Zeitdauer des Tragens des Behälters ist letztendlich vernachlässigbar klein ist. Es wird daher als unproblematisch angesehen, wenn für die Zeitdauer des Tragens die Ausgabeöffnung nicht verschlossen ist. Wesentlich ist, dass sich der Henkel mit seinem Verschlusskörper in seiner die Ausgabeöffnung verschließenden Stellung, welches nicht der Tragestellung des Henkels entspricht, befinden kann, wenn der Vorratsbehälter nebst Inhalt in einen Kühlschrank abgestellt wird. Während dieser Zeit wird der Henkel für seine Tragefunktion nicht benötigt und wird typischerweise auch zum Einpassen des Vorratsbehälters in einen Kühlschrank abgeklappt, und zwar in diejenige Stellung, in die der Verschlusskörper die Ausgabeöffnung verschließt. Damit wird der Inhalt des Behälters von dem Kühlschrankinneren getrennt. Mithin werden von der in dem Behälter bevorrateten Flüssigkeit, beispielsweise Milch, keine Gerüche oder dergleichen angenommen, wenn der Behälter verschlossen sich im Kühlschrank befindet.

Bei diesem Behälter bedeckt der Verschlusskörper bzw. ein Teil des Henkels die Ausgabeöffnung, wenn diese verschlossen ist. Damit kann die Stellung des Henkels für eine den Behälter nutzende Person ein Hinweis sein, dass sich der Behälter, wenn in einen Kühlschrank beispielsweise eingestellt, sicher verschlossen ist.

Gemäß einer Ausgestaltung ist vorgesehen, dass der Verschlusskörper als in die Ausgabeöffnung eingreifender Verschlussstopfen ausgeführt ist. Ein solcher Verschluss ist vorzugsweise abgedichtet ausgeführt, wobei zu diesem Zweck der Verschlusskörper außenseitig eine entsprechende Beschichtung, beispielsweise eine Silikonbeschichtung, tragen kann oder in die Ausgabeöffnung ein aus einem elastischen Material gefertigter Einsatz die Ausgabeöffnung einfasst. Ebenfalls ist es möglich, dass der an den Henkel angeformte Verschlussstopfen im Übergangsbereich von Verschlussstopfen und Henkel über einen Dichtring verfügt, der sodann auf dem oberen Rand der Ausgabeöffnung zum Herbeiführen einer Abdichtung aufliegt. Bei der Ausgestaltung des Verschlusskörpers als Verschlussstopfen ist dieser vorzugsweise in Richtung vom Henkel wegweisenden konisch verjüngt.

Bei einer bevorzugten Ausgestaltung ist vorgesehen, dass an zumindest eine der Außenwände des Behälters wenigstens ein Verbindungsglied angeschlossen ist. Da es sich bei dem Behälter typischerweise um ein Kunststoffteil handelt, wird bei einer solchen Ausgestaltung das zumindest ein Verbindungsglied an den Behälter angeformt sein. Ein solches Verbindungsglied dient zum Anschließen eines passiven Kühlelementes, also eines Kühlelementes, welches ein Kühlmittel beinhaltet, das im Eisfach eines Kühlschrankes oder in einem Froster gekühlt wird, beinhaltet. Durch Anschließen eines solchen Kühlelementes an den Vorratsbehälter ist nicht nur gewährleistet, dass sich das Kühlelement in unmittelbarer Nähe zu einer Wand des Behälters befindet, sondern auch dass dieses zusammen mit dem Behälter gehandhabt werden kann. Befindet sich der Behälter mit dem daran angeschlossenen Kühlelement innerhalb eines thermisch isolierten passiven Milchaufbewahrungsbehälters und wird mit dem Henkel der Behälter entnommen, um beispielsweise den Behälter wegen Nichtgebrauchs der Getränkezubereitungsmaschine in den Kühlschrank zu stellen, wird zugleich das Kühlelement entnommen. Am Kühlschrank kann das Kühlelement von dem Behälter abgenommen und ins Eisfach oder in einen Froster gelegt werden. Dies bedeutet, dass bei Nichtgebrauch des Behälters und des Kühlelementes beide Teile in die jeweils vorgesehene Kühlung eingestellt bzw. eingelegt werden können. Gleiches gilt auch umgekehrt, wenn der Behälter mit dem flüssigen Nahrungsmittel, beispielsweise der Milch aus dem Kühlschrank entnommen und in einen thermisch isolierten Milchaufbewahrungsbehälter, angeordnet etwa neben einer Kaffeemaschine, eingebracht werden soll.

In einer Weiterbildung ist vorgesehen, dass an einer solchen Außenseite des Behälters, die zum Anschließen eines Kühlelementes dient, zwei Verbindungsglieder vorgesehen sind, wobei beide Verbindungsglieder mit vertikalem Abstand zueinander angeordnet sind. Das diesbezüglich obere Verbindungselement ist ausgebildet, damit daran das Kühlelement aufgehängt werden kann, welches zu diesen Zweck über ein Aufhänger verfügt.

Das untere Verbindungsglied dient dem Zweck, dass das Kühlelement mit seiner Unterseite darauf aufgestellt werden kann. Bei einer solchen Ausgestaltung, insbesondere wenn das Kühlelement zwischen den beiden Verbindungsgliedern verklemmt gehalten ist, ist dieses spielfrei an den Behälter angeschlossen. Dieses hat nicht nur zum Vorteil, dass das Kühlelement bei einem Transport des Behälters nicht wackelt, sondern dass sich dieser immer in seiner bestimmungsgemäßen Stellung zu der benachbarten Behälterwand befindet.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig. 1:**: Eine perspektivische Ansicht eines thermisch isolierten Milchaufbewahrungsbehälters, vorgesehen zum Plazieren neben einer Getränkezubereitungsmaschine, insbesondere einer Kaffeemaschine,
- **Fig. 2:**: eine perspektivische Einsicht in den Milchaufbewahrungsbehälter der Figur 1 mit geöffnetem Deckel,
- **Fig. 3:**: eine perspektivische Ansicht eines in dem Milchaufbewahrungsbehälter angeordneten Vorratsbehälters nach Entnahme desselben aus dem Milchaufbewahrungsbehälters mit seinem Henkel in einer ersten Stellung,
- **Fig. 4:**: eine perspektivische Ansicht eines in dem Milchaufbewahrungsbehälter angeordneten Vorratsbehälters nach Entnahme desselben aus dem Milchaufbewahrungsbehälters mit seinem Henkel in einer weiteren Stellung,
- **Fig. 5:**: eine Teilquerschnittsdarstellung des Vorratsbehälters der Figur 3 durch die Ausgabeöffnung des Behälters,
- **Fig. 6:**: eine Darstellung entsprechend derjenigen der Figur 5 mit dem Henkel in seiner in Figur 4 gezeigten Stellung,
- **Fig. 7:**: eine perspektivische Rückansicht des Vorratsbehälters der vorangegangenen Figuren und
- **Fig. 8:**: der Vorratsbehälter der Figur 7 mit einem daran angeschlossenen passiven Kühlelement.

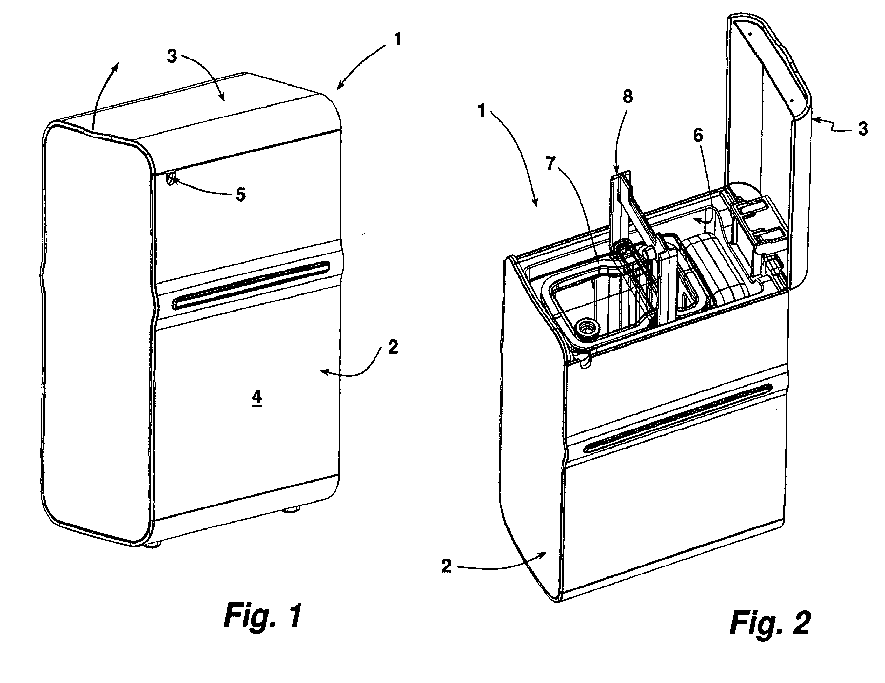

Ein Milchaufbewahrungsbehälter 1 ist in nicht näher dargestellten Art und Weise einer als Vollautomat konzipierten Kaffeemaschine zugeordnet. Der Milchaufbewahrungsbehälter 1 verfügt über ein Kunststoffgehäuse 2. Dem Gehäuse 2 zugehörig ist ein oberseitiger Deckel 3, der schwenkbar an dem übrigen Gehäuse 2 angelenkt ist. Die Schwenkbewegung zum Öffnen des Deckels ist 3 durch einen Pfeil in Figuren 1 und 2 kenntlich gemacht. In den oberen Abschluss einer Seitenwand 4 des Gehäuses 2 ist eine U-formige Leitungsdurchbrechung 5 eingebracht. Die Leitungsdurchbrechung 5 ist oberseitig durch den unteren Rand des Deckels 3 begrenzt. Die Leitungsdurchbrechung 5 dient zum Anordnen einer Milchentnahmeleitung, die mit ihrem einen Ende in ein in den Milchaufbewahrungsbehälter 1 eingestelltes Milchgebinde reicht und mit ihrem anderen Ende an eine Saugpumpe der Getränkezubereitungsmaschine angeschlossen ist. Über die Milchentnahmeleitung kann Milch für die Bereitung eines Milch- oder Kaffee-Milch-Mischgetränks entnommen werden.

Figur 2 zeigt den Milchaufbewahrungsbehälter 1 mit geöffnetem Deckel 2. Diese Einsicht in das Innere des Milchaufbewahrungsbehälters 1 zeigt, dass das Gehäuse 2 innenseitig eine umlaufende thermische Isolierung 6 aufweist. Auch der Boden und das Deckelinnere sind thermisch entsprechend isoliert. Innerhalb des Milchaufbewahrungsbehälters 1 befindet sich ein Vorratsbehälter 7, in dem die für eine Getränkezubereitung benötigte Milch bevorratet ist. An den Vorratsbehälter 7 ist schwenkbar ein Henkel 8 angeschlossen, der in seiner in Figur 2 gezeigten Stellung für eine Entnahme des Vorratsbehälters 7 aufgestellt ist. Der Vorratsbehälter 7 kann in vertikaler Richtung aus dem durch die thermische Isolierung 6 eingefassten Innenraum in vertikaler Richtung herausgezogen und umgekehrt in diesen eingestellt werden.

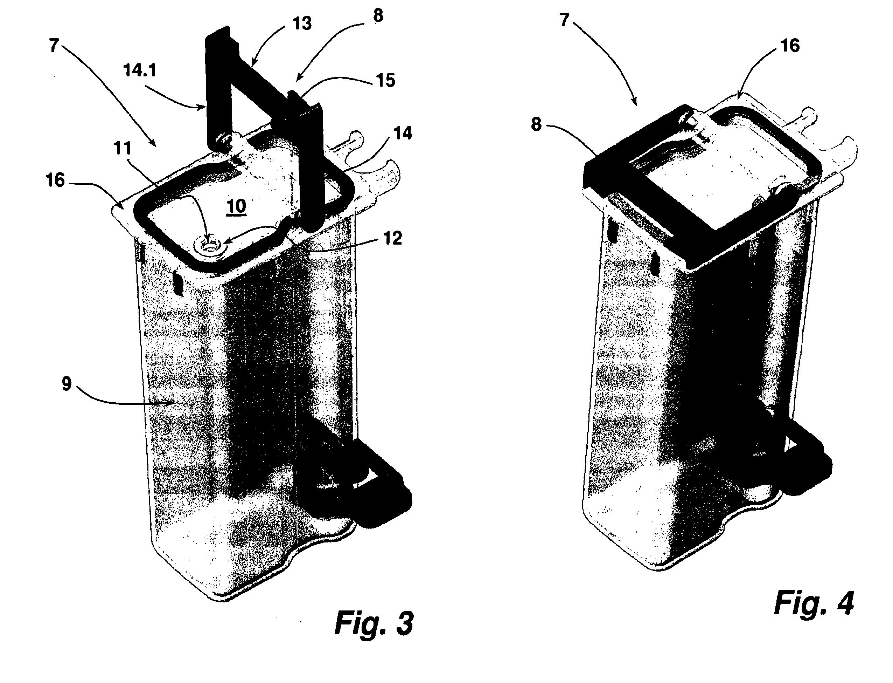

Der Vorratsbehälter 7 ist für sich alleine in Figur 3 abgebildet. Der Behälter 7 des dargestellten Ausführungsbeispiels verfügt über ein Behältnis 9, welches mit einem Deckel 10 verschlossen ist. Der Deckel 10 ist abgedichtet in die obere Öffnung des Behältnisses 9 eingreifend an dieses angeschlossen. Der Deckel 10 kann zum Befüllen und/oder Reinigen des Innenraums des Behältnisses 9 abgenommen werden. Der aus dem Behältnis 9 und dem Deckel 10 gebildete Behälter 7 ist somit geschlossen ausgeführt. Innerhalb des Deckels 10 befindet sich eine Ausgabeöffnung 11, die durch eine Fassung 12 aus elastischem Material, beispielsweise Silikon eingefasst ist. Die Ausgabeöffnung 11 dient zum Einführen eines Saugschlauches, um aus dem Behälter 7 Milch entnehmen zu können.

In einer alternativen Ausgestaltung ist vorgesehen, dass an die Fassung 12 der Ausgabeöffnung selbst ein Schlauch- oder Rohrstück angeformt ist, welches bis in den Bereich des Bodens des Behältnisses 9 reicht. Zur Entnahme von Milch braucht dann eine Saugleitung nicht notwendigerweise in das Behältnisinnere hineingeführt zu werden, sondern wird an die Fassung 12 angeschlossen.

Der Henkel 8 ist an Fortsätze zweier gegenüberliegender Seitenwände des Behältnisses 9 schwenkbar angeschlossen. Zu diesem Zweck greift jeweils ein Lagerzapfen des Henkels in eine Lageröffnung eines solchen Fortsatzes des Behältnisses 9 ein. Der Henkel 8 ist bügelförmig ausgebildet und umfasst ein Griffstück 13, welches zwei Schenkel 14, 14.1 miteinander verbindet, an die wiederum die Lagerzapfen angeformt sind. Angeformt an das Griffstück 13 des Henkels 8 ist ein als Verschlussstopfen 15 ausgeführter Verschlusskörper. Der Verschlussstopfen 15 verjüngt sich zu seinem freien Ende hin und ist an einer solchen Position des Griffstückes 13 bzw. des Henkels 8 angeordnet, dass beim Verschwenken des Henkels 8 aus seiner in Figur 3 gezeigten Stellung in seine in Figur 4 gezeigte Stellung der Verschlussstopfen 15 in die Fassung 12 der Ausgabeöffnung 11 eingeführt wird. Der Verschlussstopfen 15 dichtet bei seinem Eingreifen in die Fassung 12 die Ausgabeöffnung 11 ab.

Figuren 3 und 4 zeigen, dass das Behältnis 9 des Behälters 7 oberseitig einen umlaufenden Kragen 16 aufweist. Der Kragen 16 ist ausgeführt, dass dieser an der thermischen Isolierung 6 des Milchaufbewahrungsbehälters 1 anliegt, wenn der Vorratsbehälter 7 darin eingesetzt ist.

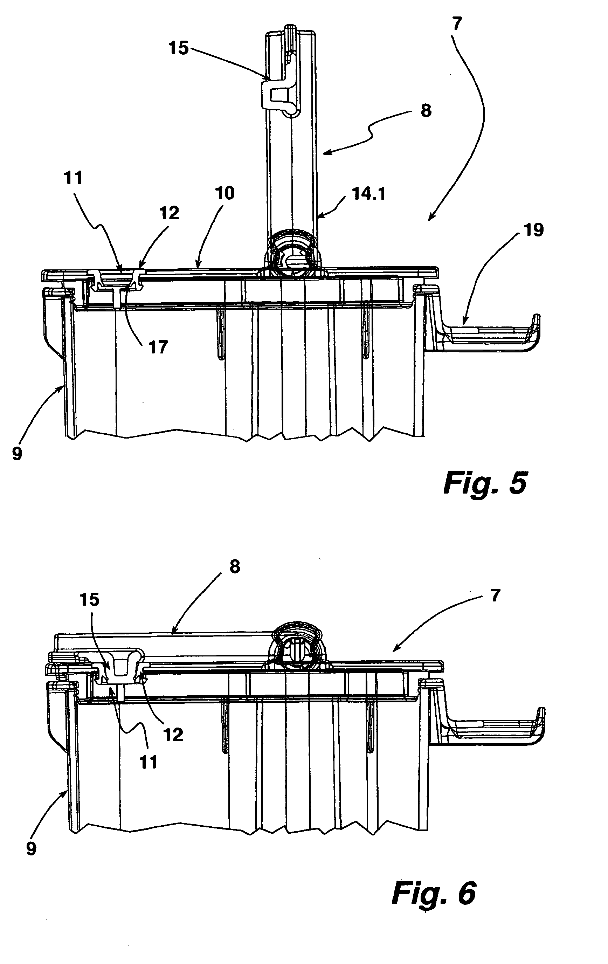

Der Querschnitt der Figur 5 verdeutlicht die Ausbildung des Deckels 10 bezüglich seines Eingriffes in das Behältnis 9. Erkennbar ist zudem die Ausgabeöffnung 11 mit seiner Fassung 12, die sich in der Schnittebene befindet. Die Fassung 12 verfügt über eine nach innen abragende Dichtlippe 17, die zum abgedichteten Verschließen der Ausgabeöffnung 11 an der Außenseite des Verschlussstopfens 15 zur Anlage gelangt, wie sich dieses aus Figur 6 ergibt, in der der Henkel 8 mit seinem Verschlussstopfen 15 in seiner die Ausgabeöffnung 11 verschließenden Stellung angeordnet ist.

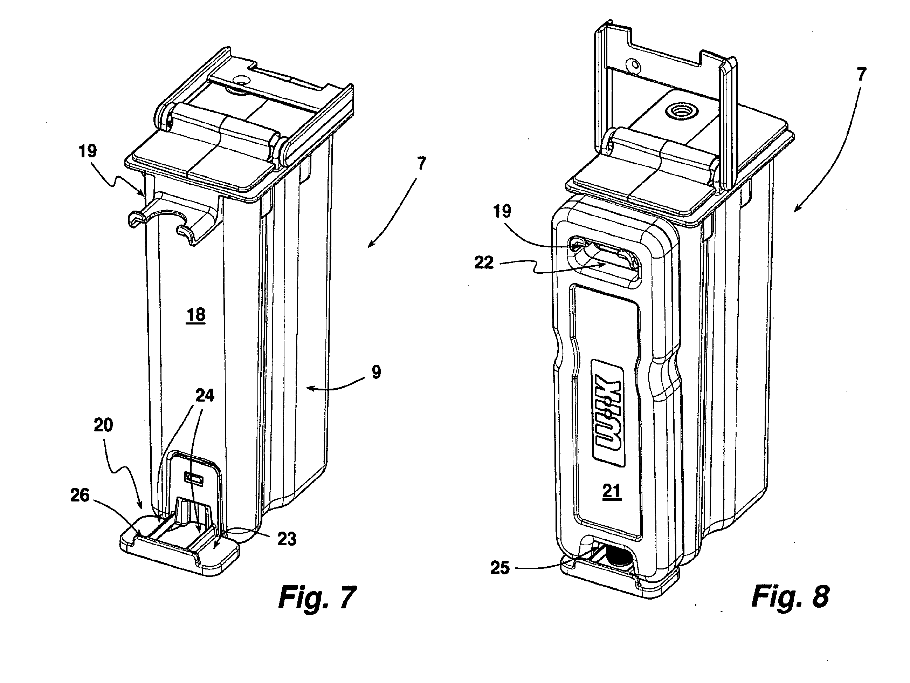

Figur 7 zeigt den Vorratsbehälter 7 in einer Rückansicht. Die in Figur 7 erkennbare Wand 18 des Behältnisses 9 trägt oberseitig ein erstes Verbindungsglied 19. Dieses ist ausgeführt nach Art eines Hakens. Das erste Verbindungsglied 19 befindet sich im Bereich des oberen Abschlusses des Behältnisses 9. Angeschlossen an den unteren Abschluss des Behältnisses 9 ist ein zweites Verbindungsglied 20. Die Verbindungsglieder 19, 20 dienen zum Anbringen und Halten eines passiven Kühlelementes, wie dieses mit dem Bezugszeichen 21 in Figur 8 gezeigt ist. Das Kühlelement 21 verfügt über eine obere Öffnung 22. Mit dieser wird das Kühlelement 20 auf das obere Verbindungsglied 19 aufgehängt. Das untere Verbindungsglied 20 dient zum unterseitigen Halten des Kühlelementes 21, welches zu diesem Zweck mit seiner Unterseite auf dem Boden 23 des zweiten Verbindungsgliedes 20 aufsteht. Der Boden 23 des zweiten Verbindungsgliedes 20 trägt zwei Positionierwülste 24, die zwischen eine unterseitige Ausnehmung 25 des Kühlelementes 21 eingreifen. Zusätzlich verfügt der Boden 23 des zweiten Verbindungsgliedes 20 über eine frontseitige Rippe 26, hinter der die Vorderseite des Kühlelementes 21 steht. Somit ist durch die Positionierwülste 24 und die Rippe 26 eine Aufnahme gebildet, um den unteren Abschluss des Kühlelementes 21 formschlüssig an dem Behältnis 9 bzw. dem Behälter 7 zu halten.

### Bezugszeichenliste

- 1: Milchaufbewahrungsbehälter
- 2: Gehäuse
- 3: Deckel
- 4: Seitenwand
- 5: Leitungsdurchbrechung
- 6: thermische Isolierung
- 7: Vorratsbehälter
- 8: Henkel
- 9: Behältnis
- 10: Deckel
- 11: Ausgabeöffnung
- 12: Fassung
- 13: Griffstück
- 14, 14.1: Schenkel
- 15: Verschlussstopfen
- 16: Kragen
- 17: Dichtlippe
- 18: Wand
- 19: erstes Verbindungsglied
- 20: zweites Verbindungsglied
- 21: Kühlelement
- 22: Öffnung
- 23: Boden
- 24: Positionierwulst
- 25: Ausnehmung
- 26: Rippe

## Patentansprüche

1. Vorratsbehälter zum Aufbewahren eines flüssigen Nahrungsmittels, etwa von Milch im Zusammenhang mit der Zufuhr derselben an eine Zubereitungsmaschine, etwa eine Kaffeemaschine, wobei der Behälter (7) geschlossen mit einer oberseitigen Ausgabeöffnung (11) zur Entnahme von für eine Zubereitung benötigter Flüssigkeit aus dem Behälter (7) ausgeführt ist und dass der Behälter (7) über einen schwenkbar an diesem angeschlossenen Henkel (8) zum Tragen des Behälters (7) verfügt, welcher Henkel (8) einem zum Verschließen der Ausgabeöffnung (11) vorgesehenen Verschlusskörper (15) trägt, **dadurch gekennzeichnet, dass** der Henkel (8) bezüglich seiner Verschwenkbarkeit an den Behälter (7) und der Verschlusskörper (15) an dem Henkel (8) derart angeordnet sind, dass in einer abgeklappten, bezüglich seiner Tragefunktion Nichtgebrauchsstellung des Henkels (8) durch den Verschlusskörper (15) die Ausgabeöffnung (11) verschlossen ist.

2. Behälter nach Anspruch 1, **dadurch gekennzeichnet, dass** der Verschlusskörper (15) in seiner die Ausgabeöffnung (11) verschließenden Stellung diese abgedichtet verschließt.

3. Behälter nach Anspruch 1 oder 2, **dadurch gekennzeichnet, dass** der Verschlusskörper (15) als Stopfen ausgeführt ist, der zum Verschließen der Ausgabeöffnung (11) in diese eingreift.

4. Behälter nach einem der Ansprüche 1 bis 3, **dadurch gekennzeichnet, dass** der Behälter (7) oberseitig durch einen die Ausgabeöffnung (11) aufweisenden, lösbar an den Behälter (7) angeschlossenen Deckel (10) verschlossen ist.

5. Thermisch isolierter Milchaufbewahrungsbehälter für eine Getränkezubereitungsmaschine, mit einem Vorratsbehälter (7) nach einem der Ansprüche 1 bis 4, **dadurch gekennzeichnet, dass** der Milchbehälter über eine Leitungsdurchbrechung zum Durchführen einer in den Behälter (7) reichenden Milchentnahmeleitung zur Entnahme von Milch verfügt.

6. Behälter nach Anspruch 5, **dadurch gekennzeichnet, dass** abgetrennt von einem den Behälter aufnehmenden Kühlraum des Aufbewahrungsbehälters wenigstens ein Fach zur Aufnahme zumindest eines passiven Kühlelements angeordnet ist, in welchem Kuhlelementfach ein Kühlelement einsetzbar und herausnehmbar gehalten ist, und der Kühlraum zur Aufnahme des Milch entfaltenden Behälters dergestalt ausgeführt ist, dass zum Erzielen einer gleichmäßigen Kühlung der in dem Behälter enthaltenen Milch dieser innerhalb des Kühlraumes mit Abstand zu dem zumindest einen Kühlelementfach und mit Abstand zu zumindest einer den Kühlraum begrenzenden Seitenwände abstellbar ist.

7. Behälter nach Anspruch 5, **dadurch gekennzeichnet, dass** der Behälter (7) an wenigstens einer seiner Außenwände (18) zumindest ein Verbindungsglied (19, 20) zum Anbringen eines passiven Kühlelementes (21) trägt.

8. Behälter nach Anspruch 7, **dadurch gekennzeichnet, dass** der Behälter (7) an wenigstens einer seiner Außenwände (8) über zwei Verbindungsglieder zum Anbringen eines passiven Kühlelementes (21) verfügt, von den eines ein oberes Verbindungsglied (19) ist, an dem ein Kühlelement (21) mit einem Aufhänger aufhängbar ist, und von denen das andere ein unteres Verbindungsglied (20) ist, auf das das Kühlelement (21), wenn mit seinem Aufhänger an dem oberen Verbindungsglied (19) aufgehängt, mit seiner Unterseite aufsteht.

9. Behälter nach Anspruch 8, **dadurch gekennzeichnet, dass** das Kühlelement (21) zwischen den beiden Verbindungsgliedern (19, 20) des Behälters (7) verklemmt gehalten ist.

## Claims

1. Storage container for storing a liquid foodstuff such as milk, in connection with the supply of same to a preparation machine, for example a coffee machine, wherein the container (7) is made closed with an output opening (11) on the top side for removing the liquid required for a preparation from the container (7) and wherein the container (7) has a handle (8) attached to it which can be swivelled for carrying the container (7), and said handle (8) bears a closing body (15) provided to close the output opening (11), **characterised in that**, with regard to its swivel ability, the handle (8) is arranged on the container (7) and the closing body (15) on the handle (8) in such a way that with the handle (8) folded back, thus in a non-use position in terms of its carrying function, the output opening (11) is closed by the closing body (15).

2. Container according to claim 1 **characterised in that**, in its position which closes the output opening (11), the closing body (15) seals this opening.

3. Container according to claim 1 or 2, **characterised in that** the closing body (15) is made as a stopper which engages in the output opening (11) in order to close it.

4. Device according to any one of claims 1 to 3 **characterised in that**, at the top, the container (7) is closed by a lid (10) having the output opening (11) and connected detachably to the container (7).

5. Thermally isolated milk storage container for a drink preparation machine with a supply container (7) according to any one of claims 1 to 4 **characterised in that** the milk container has a hole pierced in the pipe for inserting a milk removal pipe extending into the container (7) to remove milk.

6. Container according to claim 5, **characterised in that**, separated from a cooling chamber of the storage container housing the container, at least one compartment is arranged to hold at least one passive cooling element, wherein a cooling element can be inserted in and removed from said cooling element compartment, and the cooling chamber is made to hold the container containing milk such that, to achieve an even cooling of the milk held in the container, it can be set down inside the cooling chamber at a distance to the at least one cooling element compartment and at a distance to at least one of the side walls delimiting the cooling chamber.

7. Container according to claim 5, **characterised in that** the container (7) carries on at least one of its external walls (18) at least one link (19, 20) for the arrangement of a passive cooling element (21).

8. Container according to claim 7, **characterised in that** the container (7) has on at least one of its external walls (8) two links for the arrangement of a passive cooling element (21), one of which is an upper link (19), on which a cooling element (21) can be suspended by a hook, and the other of which is a lower link (20) on which the cooling element (21) stands on its underside when suspended by its hook on the upper link (19).

9. Container according to claim 8, **characterised in that** the cooling element (21) is held clamped between the two links (19, 20) of the container (7).

## Revendications

1. Réservoir de stockage pour le rangement d'un produit alimentaire liquide, du lait, par exemple, dans le cadre de l'acheminement de ce dernier vers une machine de préparation, une machine à café, par exemple, le réservoir (7) étant conformé fermé par une ouverture de distribution (11) sur le haut, afin de prélever dans le réservoir (7) le liquide nécessaire à une préparation et le réservoir (7) disposant, afin porter le réservoir (7), d'une anse (8) rabattable raccordée à ce dernier, laquelle anse (8) supporte un corps de verrouillage (15) prévu pour fermer l'ouverture de distribution (11), **caractérisé en ce que** l'anse (8), en ce qui concerne sa rabattabilité contre le réservoir (7), et le corps de verrouillage (15) sur l'anse (8) sont disposés de telle sorte que l'ouverture de distribution (11) est fermée par le corps de verrouillage (15) dans la position rabattue de l'anse (8), correspondant à une non-utilisation de la fonction de portage.

2. Réservoir selon la revendication 1, **caractérisé en ce que** le corps de verrouillage (15) dans sa position de fermeture de l'ouverture de distribution (11), ferme cette dernière de façon étanche.

3. Réservoir selon la revendication 1 ou 2, **caractérisé en ce que** le corps de verrouillage (15) est conformé en bouchon, qui, pour verrouiller l'ouverture de distribution (11), s'engage dans celle-ci.

4. Réservoir selon l'une des revendications 1 à 3, **caractérisé en ce que** le réservoir (7) est fermé par le haut par un couvercle (10) comprenant l'ouverture de distribution (11), raccordé de façon amovible au réservoir (7).

5. Réservoir de rangement de lait à isolation thermique pour une machine de préparation de boissons comportant un réservoir de stockage (7) selon l'une des revendications 1 à 4, **caractérisé en ce que** le réservoir de lait dispose d'un passage de conduit destiné à faire passer un conduit de prélèvement de lait plongeant dans le réservoir (7) afin de prélever du lait.

6. Réservoir selon la revendication 5, **caractérisé en ce qu'**au moins un compartiment destiné à recevoir au moins un élément réfrigérant passif est disposé séparé d'un espace réfrigéré du réservoir de rangement, recevant le réservoir, dans lequel compartiment à élément réfrigérant ledit élément réfrigérant peut être placé et maintenu de façon amovible, et que l'espace réfrigéré pour ranger le récipient contenant le lait est conformé de telle sorte que pour obtenir une réfrigération homogène du lait contenu dans le réservoir, ce dernier peut être déposé dans l'espace réfrigéré avec un espacement par rapport à l'au moins un compartiment à élément réfrigéré et avec un espacement par rapport à au moins une paroi latérale délimitant l'espace réfrigéré.

7. Réservoir selon la revendication 5, **caractérisé en ce que** le réservoir (7) supporte sur au moins une de ses parois extérieures (18) au moins une pièce de jonction (19, 20) permettant de mettre en place un élément réfrigérant (21) passif.

8. Réservoir selon la revendication 7, **caractérisé en ce que** le réservoir (7) dispose sur au moins une de ses parois extérieures (8) de deux pièces de jonction permettant de mettre en place un élément réfrigérant (21) passif, dont l'une est une pièce de jonction (19) supérieure à laquelle peut être suspendue un élément réfrigérant (21) muni d'une suspension et dont l'autre est une pièce de jonction (20) inférieure sur laquelle l'élément réfrigérant (21) est en appui par sa face inférieure lorsqu'il est suspendu par sa suspension sur la pièce de jonction supérieure (19).

9. Réservoir selon la revendication 8, **caractérisé en ce que** l'élément réfrigérant (21) est maintenu par serrage entre les deux pièces de jonction (19, 20) du réservoir (7).
